Europäisches Patentamt

European Patent Office

Office européen des brevets

(19)

(11) Publication number: **0 392 028**

**A1**

(12)
# EUROPEAN PATENT APPLICATION
## published in accordance with Art. 158(3) EPC

(21) Application number: 89911105.8

(22) Date of filing: 04.10.89

(86) International application number:
**PCT/JP89/01011**

(87) International publication number:
**WO 90/04875 (03.05.90 90/10)**

(51) Int. Cl.⁵: **H02K 1/27**

(30) Priority: **17.10.88 JP 259413/88**

(43) Date of publication of application:
**17.10.90 Bulletin 90/42**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **IWAMATSU, Noboru Fanuc Mansion**
**Harimomi 7-309**
**3539-1, Shibokusa Oshino-mura**
**Minamitsuru-gun**
**Yamanashi 401-05(JP)**
Inventor: **ENDO, Yuichi Fanuc Dai-3**
**Vira-karamatsu**
**3527-1, Shibokusa Oshino-mura**
**Minamitsuru-gun**
**Yamanashi 401-05(JP)**

(74) Representative: **Mock, Hans et al**
**WHEATLEY & MACKENZIE Suite 301 Sunlight**
**House Quay Street**
**Manchester M3 3JY(GB)**

(54) **PERMANENT-MAGNET SYNCHRONOUS MOTOR.**

(57) A permanent-magnet synchronous motor capable of decreasing the starting torque. The thickness ($t2$) of a magnet (12) is gradually decreased from a central position (P1) thereof toward both ends (P4), or the outer circumference of a rotor core (10) is formed by a plurality of arcs (18), and magnets (12) having a predetermined thickness ($t1$) are stuck and fastened thereto, such that the gap size ($\ell$) gradually increases from the central position (P1) of the magnet (12) toward both ends (P2, P4). This helps decrease the starting torque that results from a change in a relatioship of relative positions between the stator slot and the magnet when the rotor is rotated.

Fig.1

## DESCRIPTION

PERMANENT MAGNET TYPE SYNCHRONOUS MOTOR

TECHNICAL FIELD

The present invention relates to a permanent magnet type synchronous motor able to reduce cogging torque.

BACKGROUND ART

Cogging torque occurs due to the existence of the stator slots and the shape of the magnets on the rotor. Namely, when the motor is energized and the rotor actually turned, fluctuations are generated in the torque caused by the above-mentioned cogging operation. In particular, when the motor is used as a drive source for the rotation of the main spindle or feed mechanism in a machine tool, machining traces corresponding to the above-mentioned torque fluctuations remain on the machined surface of the work, and these may pose major problems in the finishing process.

Therefore, in the prior art measures to deviate the above defects were taken with regard to the planar shape of the magnets, to reduce the cogging torque.

Nevertheless, using only the measures taken with regard to the planar shape of the magnets limits the reduction of the cogging torque, and further, other measures must be taken to obtain a smooth torque.

DISCLOSURE OF THE INVENTION

Therefore, an object of the present invention is to solve the above problems and to reduce the cogging torque by measures other than with regard to the planar view shape of the magnets.

In view of the above-mentioned objects, the present invention provides a permanent magnet type synchronous motor wherein a plurality of permanent magnets are fixed to the surface of the rotor core, said synchronous motor having a rotor structure characterized in that the dimension of the gap between the two end portions of the above-mentioned magnets in the circumferential direction of the rotor and the stator is larger than the dimension of the gap at the center portions of the magnets, and in that the dimension of the gap between the magnets and the stator is gradually increased from the center portion to the end portions thereof.

The gap between the rotor and the stator constitutes a resistance to the magnetic flux generated from the magnets, and therefore, the construction is such that the gap becomes gradually larger from the center position of the magnets to the end position in the circumferential direction, whereby changes in the interlinking flux passing through the stator become smooth and cogging torque is reduced.

BRIEF DESCRIPTION OF THE DRAWINGS

Figure 1 is a schematic horizontal sectional view of just the rotor and stator inner periphery of an electric motor according to the present invention;

Fig. 2 is a partial, enlarged view of Fig. 1;

Fig. 3 is a partial, enlarged view showing another embodiment of an electric motor according to the present invention; and

Fig. 4 is a plan view of a magnet of Fig. 3.

BEST MODE OF CARRYING OUT THE INVENTION

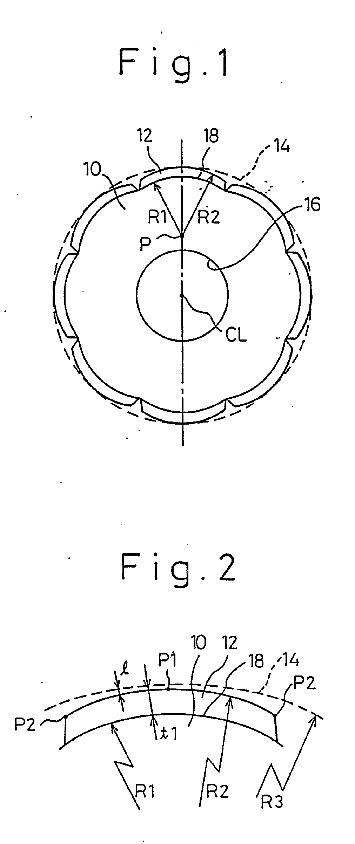

The present invention will be now explained in further detail, based on the embodiments shown in the appended drawings. Figure 1 is a horizontal sectional view of a rotor of a permanent magnet type synchronous motor according to the present invention shown together with the inner peripheral line of the stator shown by the broken line. For simplification, the slots are omitted (same in other figures). The rotor core 10, comprised of laminated electromagnetic steel sheets, has an outer shape having a center P eccentric toward the radial direction from the center line of rotation (point) CL of the rotor, as shown in Fig. 2, and forms eight arcs 18 having suitable radial dimensions R1 arranged equidistantly in the circumferential direction.

The eight arcs 18 correspond to the eight magnetic poles 8 of the present embodiment. It is clear that other numbers are also possible in the present invention.

The center hole 16 of the rotor core 10 is provided for insertion of the output shaft. The above-mentioned radius R1 is smaller than the radius R3 of the broken line 14 showing the inner periphery of the stator. Magnets 12 are adhered and fixed to the arcs 18 of the rotor core 10 as field poles. The horizontal sectional shapes of the magnets 12 comprise an outer curve of a radius R2 centered on the center of curvature of the arcs 18 and an inner curve of the radius R1. The radius R2 is larger than the radius R1 and smaller than the stator inner peripheral radius R3. Therefore, the dimension $\ell$ of the gap between the outer surface of the magnets 12 and the inner peripheral surface 14 of the stator is smallest at the point P1 on the straight line connecting the center point CL to the rotor and the centers P, i.e., the point P1 showing the center position in the circumferential direction of magnets 12, and gradually increases along with the approach to the two ends P2.

The dimension $\ell$ of the gap between the magnets 12 and the stator inner periphery gradually changes as explained above, so that, when the rotor turns, the magnetic resistance with respect to the flux generated by the field poles of the magnets 12 changes smoothly, and therefore, the changes of the interlinking flux passing through the stator becomes smooth so that the cogging torque is reduced. In the above embodiment, the thickness t1 of the magnets 12 is made constant, which facilitates manufacture of the magnets by the sintering process. Further, the resistance with respect to the demagnetizing field is uniform so that local demagnetization of the magnets 12 can be avoided.

In the above embodiment, the illustration and explanation were made of a motor with the stator arranged at the outer circumferential side and the rotor at the inner side, but the same effect is produced where the stator is provided at the inner side and the rotor is disposed at the outer circumferential side by forming the magnet to give a sectional shape giving smooth changes in the gap dimensions.

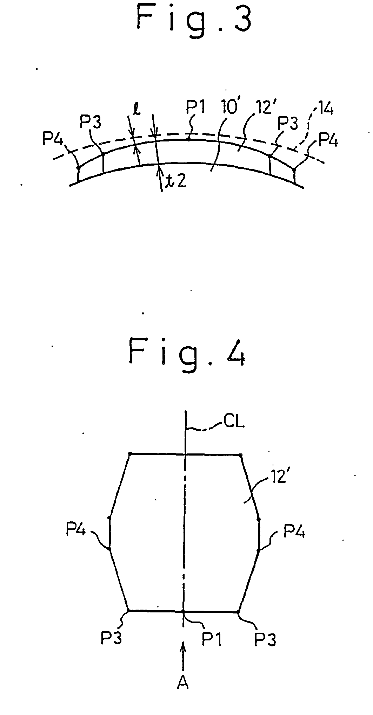

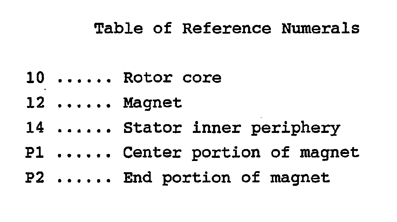

An explanation will be made of another embodiment according to the present invention referring to Fig. 3 and Fig. 4. The outer form of the rotor core 10' forms a single circle, and therefore, is set concentrically with respect to the inner periphery 14 of the stator. On the outer periphery of the rotor core 10' is adhered a hexagonal magnet 12' with a planar shape of substantially a block shown in Fig. 4. The thickness dimension t2 of the magnet 12' seen from the direction of the arrow line A of Fig. 4 is largest at the symmetrical line position P1 of the magnet 12' and gradually decreases along with the movement to the points P3 and P4 at the two ends thereof. The outer curve of the magnets 12' may be an arc or may be another curve. Even in the first embodiment shown in Fig. 1 and Fig. 2, it is not absolutely necessary to form the arc shapes. In this second embodiment too, there is the disadvantage of local demagnetization resistance, but the embodiment contributes to the reduction of the cogging torque.

As clear from the above explanation, according to the present invention, the changes in the passing through interlinking flux become smooth, so that the cogging torque can be reduced.

## CLAIMS

1. A permanent magnet type synchronous motor wherein a plurality of permanent magnets are fixed to the surface of the rotor core, said synchronous motor having a rotor structure characterized in that the dimension of the gap between the two end portions of said magnets in the circumferential direction of the rotor and the stator is larger than the dimension of the gap at the center portions of the magnets and in that the dimension of the gap between the magnets and the stator gradually increases from the center portion to the end portions.

2. A permanent magnet type synchronous motor according to claim 1, wherein the outer periphery of said rotor core is formed so that a plurality of projections having a smooth curve are angularly equi-spaced thereon, and a magnet having a uniform thickness is fixed on each of said projections.

3. A permanent magnet type synchronous motor according to claim 1, wherein the outer periphery of said rotor core is formed by one circle, and magnets each having a maximum thickness at a central position thereof, the thickness thereof gradually reducing towards both ends thereof, are fixed to the outer periphery of said rotor core.

# Fig.1

# Fig.2

# Fig.3

# Fig.4

## Table of Reference Numerals

10 ...... Rotor core
12 ...... Magnet
14 ...... Stator inner periphery
P1 ...... Center portion of magnet
P2 ...... End portion of magnet

# INTERNATIONAL SEARCH REPORT

International Application No  PCT/JP89/01011

## I. CLASSIFICATION OF SUBJECT MATTER (if several classification symbols apply, indicate all) 6

According to International Patent Classification (IPC) or to both National Classification and IPC

Int. Cl$^5$    H02K1/27

## II. FIELDS SEARCHED

### Minimum Documentation Searched 7

| Classification System | Classification Symbols |
|---|---|
| IPC | · H02K1/27, 1/17 |

Documentation Searched other than Minimum Documentation
to the Extent that such Documents are Included in the Fields Searched 8

| Jitsuyo Shinan Koho | 1955 – 1989 |
|---|---|
| Kokai Jitsuyo Shinan Koho | 1972 – 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 61-58457 (Fanuc Ltd.),<br>25 March 1986 (25. 03. 86),<br>Page 330, lower left column, line 9 to<br>page 331, upper right column, line 15<br>(Family: none) | 1 – 3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 26, 1989 (26. 12. 89) | January 22, 1990 (22. 01. 90) |
| International Searching Authority | Signature of Authorized Officer |
| Japanese Patent Office | |

Form PCT/ISA/210 (second sheet) (January 1985)